# EUROPÄISCHE PATENTSCHRIFT

(11) **EP 1 584 841 B1**
(45) Veröffentlichungstag und Bekanntmachung des Hinweises auf die Patenterteilung: **28.02.2007**
(21) Anmeldenummer: 04008666.2
(22) Anmeldetag: 10.04.2004
(51) Int. Cl.: F16G 13/16

(54) **Energieführungskette**
Energy guiding chain
Chaine de guidage d'energie

(43) Veröffentlichungstag der Anmeldung: 12.10.2005
(73) Patentinhaber: ekd gelenkrohr GmbH, 40699 Erkrath (DE)
(72) Erfinder: Klein, Holger, 40625 Düsseldorf (DE)
(74) Vertreter: Albrecht, Rainer Harald

(56) Entgegenhaltungen:
- EP-B- 1 076 784
- DE-A- 2 417 516
- DE-A- 19 851 340
- DE-C- 3 928 236

## Beschreibung

Die Erfindung betrifft eine Energieführungskette aus gelenkig verbundenen Kettengliedern mit einem ortsfest angeordneten ersten Kettenende und einem an ein bewegliches Maschinenteil anschließbaren zweiten Kettenende,
wobei die Kettenglieder zwei durch Querstege verbundene Kettenlaschen aufweisen und an den Kettenlaschen gelenkig verbunden sind,
wobei Abschnitte der Kette aufeinanderliegen und ein oberer Abschnitt der Kette sich bei Bewegungen des zweiten Kettenendes auf einem unteren Abschnitt der Kette bewegt,
wobei an den beiden Kettenlaschen der Kettenglieder separate Schuhe lösbar befestigt sind, an denen sich der obere Kettenabschnitt und der untere Kettenabschnitt gegeneinander abstützen, und
wobei die Schuhe als Rollschuhe ausgebildet sind, die mindestens einen im Schuh gelagerten und an einer ebenen Fläche des Schuhs vorstehenden Wälzkörper aufweisen.

Eine Energieführungskette mit den beschriebenen Merkmalen ist aus DE 24 17 516 A bekannt. Die an den Kettenlaschen der Kettenglieder befestigten Rollschuhe weisen einen winkelförmigen Träger auf, der an der Innenseite der Kettenlaschen angeschraubt wird und mit dem oberen Rand der Kettenlaschen im Wesentlichen bündig abschließt. Die Wälzkörper sind an einer frei vorstehenden Achse fliegend gelagert. Die Stabilität der bekannten Anordnung ist verbesserungsbedürftig. Nachteilig ist ferner, dass der Aufnahmeraum der Energieführungskette durch die in den Innenraum der Kette vorstehenden Rollschuhe reduziert wird. Einen ähnlichen Nachteil weist eine in DE 198 51 340 A1 beschriebene Anordnung auf.

Aus DE 39 28 236 C1 ist eine Energieführungskette bekannt, an deren Kettengliedern Gleitschuhe lösbar befestigt sind. Die Gleitschuhe weisen oberseitig ebene Gleitflächen auf, die aufeinander liegen, wenn der obere und der untere Kettenabschnitt relativ zueinander gegeneinander bewegt werden. Die Reibung, insbesondere Haftreibung, zwischen den aufeinanderliegenden Gleitflächen ist hoch. Häufig werden Energieführungsketten in Außenanlagen eingesetzt und sind Witterungseinflüssen ausgesetzt. Insbesondere bei Nässe tritt zwischen den Gleitflächen der aufeinanderliegenden Schuhe ein ausgeprägter Slip/Stick-Effekt auf. Dieser hat zur Folge, dass eine große Kraft aufgebracht werden muss, um die Energieführungskette aus der Ruhe zu bewegen. Sobald die Gleitflächen sich gegeneinander bewegen, fällt die Reibungskraft an den Gleitflächen schlagartig ab. Mit zunehmender Kettenlänge hat der Slip/Stick-Effekt zur Folge, dass das mit der Energieführungskette verbundene Maschinenteil ruckartige Fahrbewegungen ausführt und präzise gesteuerte Stellbewegungen nicht mehr möglich sind.

Aus EP 1 076 784 B1 sind Kettenglieder bekannt, an deren Kettenlaschen Rollen gelagert sind. Die Rollen sind in Taschen der Kettenlaschen eingesetzt und stehen an der Oberseite der Kettenlaschen vor. Die mit Rollen versehenen Kettenglieder sind mit herkömmlichen Kettengliedern ohne Rollen kombinierbar und werden vereinzelt in die Energieführungskette eingesetzt. Die mit Rollen versehenen Kettenglieder weisen konstruktionsbedingt eine große Länge auf und sind zumeist länger als die übrigen Kettenglieder der Energieführungskette, was einen schlechten Lauf der Energieführungskette im Bogenbereich zwischen dem oberen Kettenabschnitt und dem unteren Kettenabschnitt zur Folge hat.

Der Erfindung liegt die Aufgabe zugrunde, eine Energieführungskette anzugeben, die sich durch einen gleichmäßigen Lauf und eine geringe Reibung zwischen den aufeinanderliegenden Abschnitten der Kette auszeichnet. Der Aufnahmeraum der Kette soll durch die Anordnung der Rollschuhe nicht beeinträchtigt werden.

Ausgehend von einer Energieführungskette mit den eingangs beschriebenen Merkmalen wird die Aufgabe erfindungsgemäß dadurch gelöst, dass die Rollschuhe einen als Kunststoffspritzgussteil gefertigten Grundkörper aufweisen, der auf die Kettenlasche aufsteckbar ist, mindestens eine Lageraufnahme für Wälzkörper enthält und eine als ebene Fläche ausgebildete Oberseite aufweist. Die ebene Fläche bildet eine Abrollfläche für die an anderen Kettengliedern befestigten Rollschuhe. Die Wälzkörper sind innerhalb der Rollschuhe gelagert und stehen an der ebenen Fläche geringfügig vor. Der Überstand liegt im Bereich eines Millimeters oder einiger weniger Millimeter. Vorzugsweise sind die Rollschuhe mit kleinen Wälzkörpern ausgerüstet. Da die erfindungsgemäßen Rollschuhe an den Kettengliedern lösbar befestigt sind, können vorhandene Energieführungsketten mit den erfindungsgemäßen Rollschuhen nachgerüstet werden. Defekte oder an den ebenen Flächen verschlissene Rollschuhe sind auf einfache Weise austauschbar. Zudem sind bereits existierende, unter hohem Reibverschleiß und mit dem beschriebenen Slip/Stick-Effekt behaftete Energieführungsketten mit den erfindungsgemäßen Rollschuhen leicht nachrüstbar.

Die Rollschuhe sind kürzer als die Kettenglieder, wobei Ihre Länge zweckmäßig so bemessen ist, dass die Rollschuhe im Kettenbogen zwischen dem oberen und unteren Kettenabschnitt ohne Lücke aufeinander folgen.

Vorzugsweise sind die Wälzkörper in Kettenlängsrichtung betrachtet an einem Ende oder an beiden Enden der Rollschuhe angeordnet. In weiterer Ausgestaltung lehrt die Erfindung, dass Rollschuhe mit einem Wälzkörper am voreilenden Ende und Rollschuhe mit einem Wälzkörper am nacheilenden Ende in Kettenlängsrichtung im Wechsel so angeordnet sind, dass die Abstände zwischen den Wälzkörpern benachbarter Rollschuhe nicht der Kettenteilung entsprechen. Bei dieser Anordnung treten keine Stöße auf, wenn ein Wälzkörper über eine Lücke zwischen zwei aufeinanderfolgenden Rollschuhen bewegt wird, da aufgrund des von der Kettenteilung abweichenden Abstandes zwischen den Wälzkörpern stets ein Teil der Wälzkörper an Flächen von Gleitschuhen abgestützt ist.

Im Allgemeinen sind die Wälzkörper der hintereinander auf den Kettengliedern angeordneten Schuhe miteinander fluchtend in einer Reihe angeordnet. Wenn der obere Kettenabschnitt auf dem unteren Kettenabschnitt bewegt wird, berühren sich die Wälzkörper der übereinander bewegten Rollschuhe. Der Überstand der Wälzkörper an den ebenen Flächen der Rollschuhe ist dabei so gering, dass sich das Überfahren der Rollen nicht störend bemerkbar macht. Die Zahl der Stöße, die durch ein Überfahren der Wälzkörper verursacht werden, kann reduziert werden, wenn die Wälzkörper der hintereinander auf den Kettengliedern angeordneten Schuhe in mindestens zwei zueinander parallelen Reihen angeordnet sind, wobei der Abstand zwischen den Reihen so bemessen ist, dass die in unterschiedlichen Reihen angeordneten Wälzkörper sich nicht berühren, wenn der obere Kettenabschnitt auf dem unteren Kettenabschnitt bewegt wird.

Die Wälzkörper können aus Laufrollen, Kugeln oder Wälzlagern bestehen. Bevorzugt sind Wälzlager, z.B. in Form von Topfkugellagern, Rillenkugellagern, Nadellagern oder dgl.

Im Folgenden wird die Erfindung anhand einer lediglich ein Ausführungsbeispiel darstellenden Zeichnung erläutert. Es zeigen schematisch
- Fig. 1: eine Energieführungskette, auf deren Kettengliedern erfindungsgemäße Rollschuhe befestigt sind,
- Fig. 2 und 3: Ausschnitte aus der in Fig. 1 dargestellten Energieführungskette,
- Fig. 4: einen der auf die Energieführungskette aufgesteckten Rollschuhe in einer gegenüber den Fig. 1 bis 3 vergrößerten Darstellung,
- Fig. 5: eine stirnseitige Ansicht des in Fig. 4 dargestellten Rollschuhs aus der Blickrichtung A in Fig. 4,
- Fig. 6: eine Draufsicht auf den in Fig. 4 dargestellten Rollschuh,
- Fig. 7a und 7b: weitere Ausführungsbeispiele des Rollschuhs, jeweils in einer Draufsicht.

Die in den Figuren dargestellte Energieführungskette dient der Aufnahme und Führung von flexiblen Leitungen zwischen einem ortsfesten Anschluss und einem beweglichen Maschinenteil. Die Energieführungskette besteht aus gelenkig verbundenen Kettengliedern 1, die jeweils zwei durch Querstege verbundene Kettenlaschen 2 aufweisen und an den Kettenlaschen gelenkig verbunden sind. Die Energieführungskette weist ein ortsfest angeordnetes erstes Kettenende 3 und ein an ein bewegliches Maschinenteil anschließbares zweites Kettenende 4 auf. Abschnitte der Energieführungskette liegen dabei aufeinander auf, wobei ein oberer Abschnitt 5 der Kette sich bei Bewegungen des nicht dargestellten Maschinenteils auf einem unteren Abschnitt 6 der Energieführungskette bewegt. An den Kettengliedern 1 sind Schuhe 7, 7' lösbar befestigt, an denen sich der obere Kettenabschnitt 5 und der untere Kettenabschnitt 6 gegeneinander abstützen. Diese Schuhe 7, 7' sind als Rollschuhe ausgebildet, die mindestens einen im Schuh gelagerten und an einer ebenen Fläche 8 des Schuhs vorstehenden Wälzkörper 9, 9' aufweisen. Die Rollschuhe 7, 7' sind auf die Kettenlaschen 2 aufgesteckt und/oder mit diesen verschraubt.

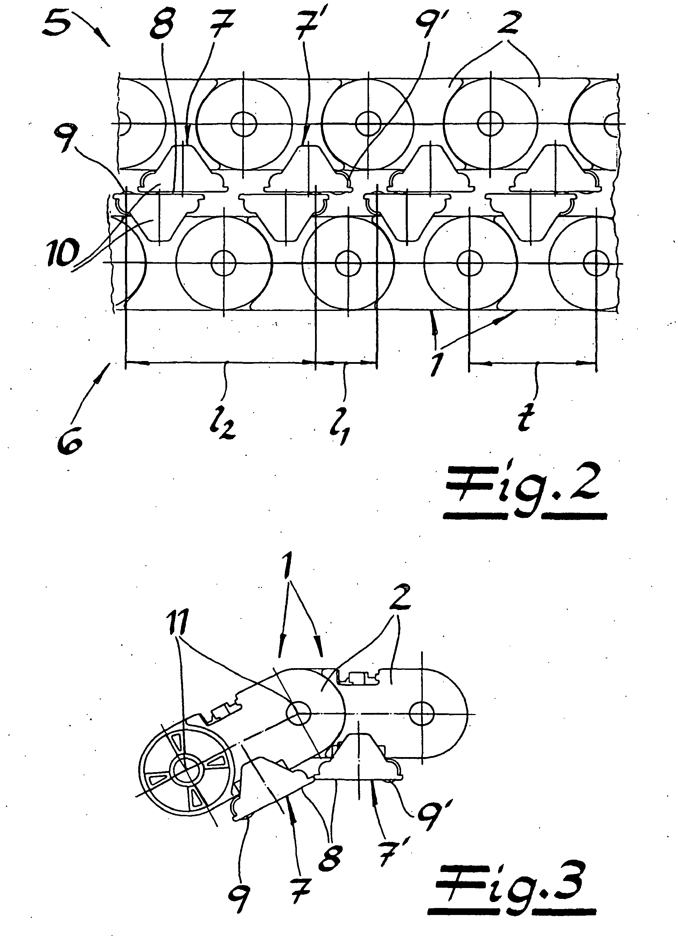

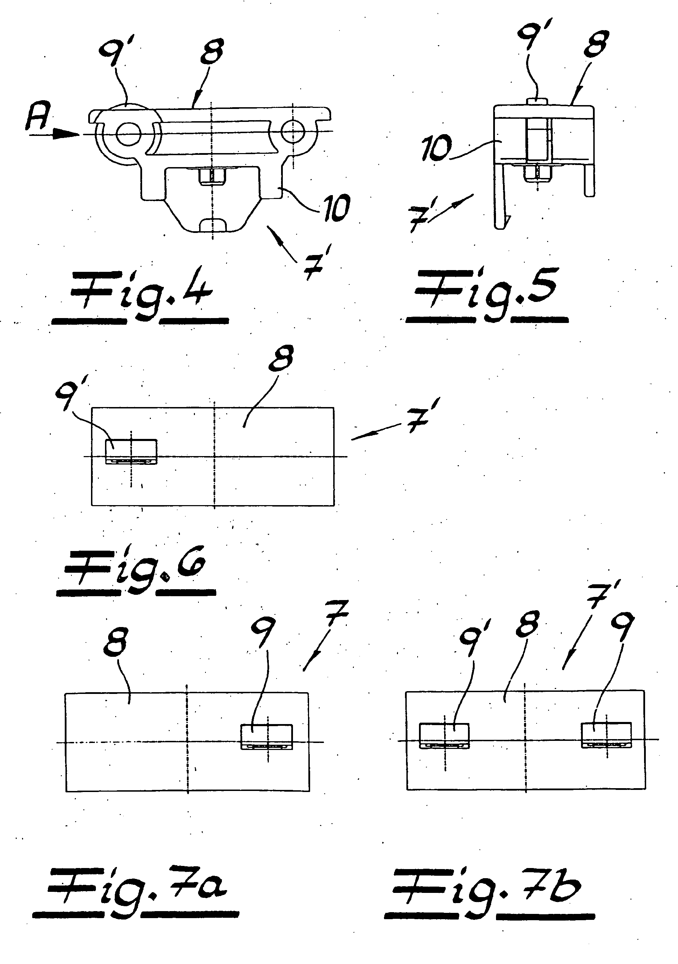

Die Fig. 2 und 3 zeigen eine Außenseite und Fig. 4 eine Innenseite der Rollschuhe 7, 7'. Die Rollschuhe 7, 7' weisen einen als Kunststoffspritzgussteil gefertigten Grundkörper 10 auf, der auf die Kettenlaschen 2 aufsteckbar ist, mindestens eine Lageraufnahme für Wälzkörper enthält und dessen Oberseite als ebene Fläche 8 ausgebildet ist. Die ebene Fläche 8 ist mindestens doppelt so breit wie der an der Fläche vorstehende Wälzkörper 9, 9' und bildet eine Abrollfläche für Rollschuhe, die an anderen Kettengliedern der Energieführungskette befestigt sind.

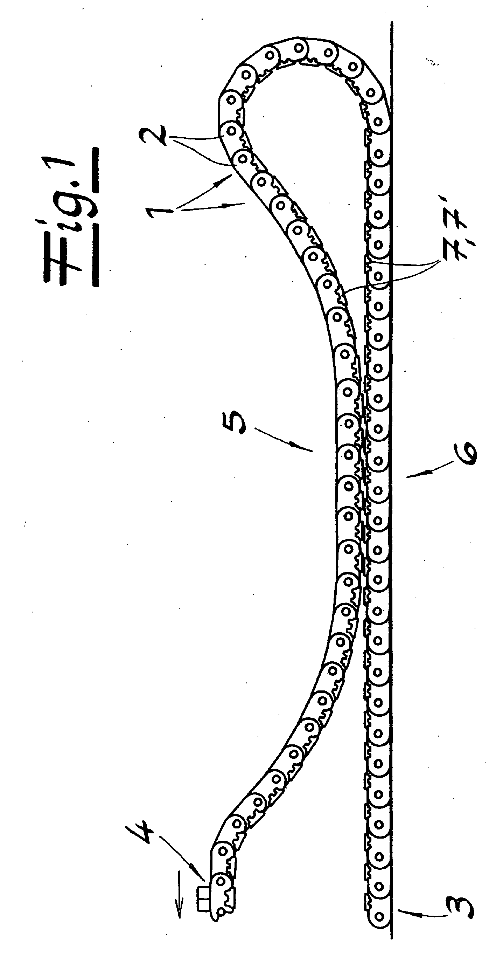

Einer vergleichenden Betrachtung der Fig. 1 bis 3 entnimmt man, dass die Rollschuhe 7, 7' im Innenradius auf den Kettenlaschen 2 der Kettenglieder angeordnet sind. Sie sind kürzer als die Kettenglieder 1, und ihre Länge ist so bemessen, dass die Rollschuhe 7, 7' im Kettenbogen zwischen dem oberen und dem unteren Kettenabschnitt 5, 6 im Wesentlichen ohne Lücke aufeinanderfolgen.

Die Wälzkörper 9, 9' der Rollschuhe können an einem Ende oder an beiden Enden der Rollschuhe 7, 7' angeordnet sein (vgl. Fig. 7a und 7b). Gemäß einer bevorzugten und in den Fig. 2 und 3 dargestellten Anordnung sind Rollschuhe 7 mit einem Wälzkörper 9 am voreilenden Ende und Rollschuhe 7' mit einem Wälzkörper 9' am nacheilenden Ende in Kettenlängsrichtung im Wechsel so angeordnet, dass die Abstände I₁, I₂ zwischen den Wälzkörpern 9, 9' benachbarter Rollschuhe 7, 7' nicht der Kettenteilung t entsprechen. Kettenteilung t bezeichnet das Maß zwischen den Gelenkachsen 11 der Kettenlaschen 2. Dadurch, dass die Abstände I₁, I₂ zwischen den Wälzkörpern 9, 9' nicht der Kettenteilung t entsprechen, ist sichergestellt, dass stets ein Teil der Wälzkörper an den ebenen Flächen 8 der Rollschuhe 7, 7' abgestützt ist, während andere Wälzkörper über Lücken zwischen zwei aufeinanderfolgenden Rollschuhen 7, 7' bewegt werden. Anhand der Fig. 2 wird dies deutlich. In der dargestellten Position sind die Wälzkörper 9 auf den Flächen 8 der auf dem unteren Kettenabschnitt 6 aufgesteckten Rollschuhe abgestützt, während die Wälzkörper 9' eine Lücke zwischen zwei aufeinanderfolgenden Rollschuhen 7, 7' überfahren. Durch die ständig gewährleistete Abstützung zumindest an einem Teil der Rollschuhe ist ein ruhiger Lauf der Energieführungskette gewährleistet.

Die Wälzkörper 9, 9' stehen an den ebenen Flächen 8 der Rollschuhe 7, 7' nur geringfügig über. Der Überstand liegt im Bereich eines Millimeters bis einigen wenigen Millimetern. Die beim Überfahren der vorstehenden Konturen auftretenden Stöße sind vernachlässigbar und stören den ruhigen Lauf der Energieführungskette nicht. Die Wälzkörper 9, 9' können aus Laufrollen oder Kugeln bestehen. Vorzugsweise werden als Wälzkörper 9, 9' Wälzlager eingesetzt, die als Topfkugellager, Rillenkugellager, Nadellager oder dgl. ausgebildet sind. Die Wälzlager weisen einen auf eine Achse aufsteckbaren inneren Laufring sowie einen demgegenüber verdrehbaren äußeren Laufring auf und sind jeweils auf einer Achse angeordnet, die im Grundkörper 10 der Rollschuhe 7, 7' eingesetzt sind.

## Patentansprüche

1. Energieführungskette aus gelenkig verbundenen Kettengliedern (1) mit einem ortsfest angeordneten ersten Kettenende (3) und einem an ein bewegliches Maschinenteil anschließbaren zweiten Kettenende (4),
wobei die Kettenglieder (1) zwei durch Querstege verbundene Kettenlaschen (2) aufweisen und an den Kettenlaschen (2) gelenkig verbunden sind,
wobei Abschnitte (5, 6) der Kette aufeinanderliegen und ein oberer Abschnitt (5) der Kette sich bei Bewegungen des zweiten Kettenendes auf einem unteren Abschnitt (6) der Kette bewegt,
wobei an den beiden Kettenlaschen (2) der Kettenglieder separate Schuhe lösbar befestigt sind, an denen sich der obere Kettenabschnitt (5) und der untere Kettenabschnitt (6) gegeneinander abstützen, und
wobei die Schuhe als Rollschuhe (7, 7') ausgebildet sind, die mindestens einen im Schuh gelagerten und an einer ebenen Fläche (8) des Schuhs vorstehenden Wälzkörper (9, 9') aufweisen,
**dadurch gekennzeichnet, dass** die Rollschuhe (7, 7') einen als Kunststoffspritzgussteil gefertigten Grundkörper (10) aufweisen, der auf die Kettenlaschen aufsteckbar ist, mindestens eine Lageraufnahme für Wälzkörper (9, 9') enthält und eine als ebene Fläche (8) ausgebildete Oberseite aufweist.

2. Energieführungskette nach Anspruch 1, **dadurch gekennzeichnet, dass** die Rollschuhe (7, 7') kürzer sind als die Kettenglieder (1) und ihre Länge so bemessen ist, dass die Rollschuhe (7, 7') im Kettenbogen zwischen dem oberen und dem unteren Kettenabschnitt (5, 6) ohne Lücke aufeinanderfolgen.

3. Energieführungskette nach Anspruch 1 oder 2, **dadurch gekennzeichnet, dass** die Wälzkörper (9, 9') an einem Ende oder an beiden Enden der Rollschuhe (7, 7') angeordnet sind.

4. Energieführungskette nach einem der Ansprüche 1 bis 3, **dadurch gekennzeichnet, dass** Rollschuhe (7) mit einem Wälzkörper (9) am voreilenden Ende und Rollschuhe (7') mit einem Wälzkörper (9') am nacheilenden Ende in Kettenlängsrichtung im Wechsel so angeordnet sind, dass die Abstände (I₁, I₂) zwischen den Wälzkörpern (9, 9') benachbarter Rollschuhe (7, 7') nicht der Kettenteilung (t) entsprechen.

5. Energieführungskette nach einem der Ansprüche 1 bis 4, **dadurch gekennzeichnet, dass** die Wälzkörper (9, 9') der hintereinander auf den Kettengliedern angeordneten Schuhe (7, 7') in mindestens zwei zueinander parallelen Reihen angeordnet sind, wobei der Abstand zwischen den Reihen so bemessen ist, dass die in unterschiedlichen Reihen angeordneten Wälzkörper sich nicht berühren, wenn der obere Kettenabschnitt (5) auf dem unteren Kettenabschnitt (6) bewegt wird.

6. Energieführungskette nach einem der Ansprüche 1 bis 5, **dadurch gekennzeichnet, dass** die Wälzkörper (9, 9') aus Laufrollen, Kugeln oder Wälzlagern bestehen.

## Claims

1. Energy guiding chain consisting of chain links (1) that are connected in an articulated manner, with a first chain end (3) arranged in a stationary manner and a second chain end (4) which can be connected to a movable machine part,
wherein the chain links (1) comprise two link plates (2) joined by transverse webs and are connected to the link plates (2) in an articulated manner,
wherein sections (5, 6) of the chain bear against one another and an upper section (5) of the chain moves on a lower section (6) of the chain in the event of movements of the second chain end,
wherein separate shoes are releasably fixed to the two link plates (2) of the chain links, at which shoes the upper chain section (5) and the lower chain section (6) are supported against one another, and
wherein the shoes are designed as roller shoes (7, 7') which have at least one rolling body (9, 9') mounted in the shoe and protruding from a flat surface (8) of the shoe,
**characterised in that** the roller shoes (7, 7') have a main body (10) produced as an injection-moulded plastic part which can be placed onto the link plates, contains at least one bearing recess for rolling bodies (9, 9') and has an upper side designed as a flat surface (8).

2. Energy guiding chain according to claim 1, **characterised in that** the roller shoes (7, 7') are shorter than the chain links (1) and their length is such that the roller shoes (7, 7') in the chain arc between the upper and the lower chain section (5, 6) follow one another without gaps.

3. Energy guiding chain according to claim 1 or 2, **characterised in that** the rolling bodies (9, 9') are arranged at one end or at both ends of the roller shoes (7, 7').

4. Energy guiding chain according to one of claims 1 to 3, **characterised in that** roller shoes (7) with a rolling body (9) at the leading end and roller shoes (7') with a rolling body (9') at the trailing end are arranged in an alternating manner in the longitudinal direction of the chain such that the distances (I₁, I₂) between the rolling bodies (9, 9') of adjacent roller shoes (7, 7') do not correspond to the chain pitch (t).

5. Energy guiding chain according to one of claims 1 to 4, **characterised in that** the rolling bodies (9, 9') of the shoes (7, 7') arranged one behind the other on the chain links are arranged in at least two parallel rows, wherein the distance between the rows is such that the rolling bodies arranged in different rows do not touch one another when the upper chain section (5) is moved on the lower chain section (6).

6. Energy guiding chain according to one of claims 1 to 5, **characterised in that** the rolling bodies (9, 9') consist of rollers, balls or roller bearings.

## Revendications

1. Chaîne de guidage d'énergie composée de maillons de chaîne (1) reliés de façon articulée, avec une première extrémité de chaîne (3) fixe et une deuxième extrémité de chaîne (4) pouvant être raccordée à une partie de machine mobile, dans laquelle :
- les maillons de chaîne (1) présentent deux languettes de chaîne (2) reliées par des traverses et sont reliés de façon articulée aux languettes de chaîne (2),
- des segments (5, 6) de la chaîne sont superposés et un segment supérieur (5) de la chaîne se déplace sur un segment inférieur (6) de la chaîne lors de mouvements de la deuxième extrémité de chaîne,
- des patins séparés fixés de façon amovible aux deux languettes de chaîne (2) des maillons de chaîne, supportent en appui l'un contre l'autre le segment de chaîne supérieur (5) et le segment de chaîne inférieur (6), et
- les patins sont des patins roulants (7, 7') qui présentent au moins un corps cylindrique (9, 9') disposé dans le patin et faisant saillie d'une surface plane (8) du patin,
**caractérisée en ce que**
les patins roulants (7, 7') présentent un corps de base (10) en forme de pièce moulée par injection en matière plastique, qui peut être emboîté sur les languettes de chaîne, qui comprend au moins un logement pour des corps cylindriques (9, 9') et qui présente une face supérieure en forme de surface plane (8).

2. Chaîne de guidage d'énergie selon la revendication 1,
**caractérisée en ce que**
les patins roulants (7, 7') sont plus courts que les maillons de chaîne (1) et leur longueur fait que les patins roulants (7, 7') se succèdent sans interstice dans l'arc de chaîne entre les segments de chaîne supérieur et inférieur (5, 6).

3. Chaîne de guidage d'énergie selon la revendication 1 ou 2,
**caractérisée en ce que**
les corps cylindriques (9, 9') sont disposés à une extrémité ou aux deux extrémités des patins roulants (7, 7').

4. Chaîne de guidage d'énergie selon l'une quelconque des revendications 1 à 3,
**caractérisée en ce que**
des patins roulants (7) avec un corps cylindrique (9) et des patins roulants (7') avec un corps cylindrique (9') sont respectivement disposés en alternance à l'extrémité avant et à l'extrémité arrière dans la direction longitudinale de la chaîne, de telle sorte que les distances (I₁, I₂) entre les corps cylindriques (9, 9') de patins roulants (7, 7') voisins ne correspondent pas au pas de la chaîne (t).

5. Chaîne de guidage d'énergie selon l'une quelconque des revendications 1 à 4,
**caractérisée en ce que**
les corps cylindriques (9, 9') des patins (7, 7') disposés les uns derrière les autres sur les maillons de chaîne sont placés en au moins deux rangées parallèles l'une à l'autre, la distance entre les rangées étant prévue afin que les corps cylindriques disposés dans différentes rangées ne se touchent pas lorsque le segment de chaîne supérieur (5) se déplace sur le segment de chaîne inférieur (6).

6. Chaîne de guidage d'énergie selon l'une quelconque des revendications 1 à 5,
**caractérisée en ce que**
les corps cylindriques (9, 9') sont des galets de roulement, des billes ou des paliers à rouleaux.
